# EUROPEAN PATENT APPLICATION

(11) **EP 2 178 002 A2**
(43) Date of publication of application: **21.04.2010**
(21) Application number: 09100017.4
(22) Date of filing: 07.01.2009
(51) Int. Cl.: G06F 17/27, G06F 17/30

(54) **System and method for technical document analysis, and patent analysis system**

(30) Priority: 20.10.2008 TW 097140183
(71) Applicant: Industrial Technology Research Institute, Hsinchu 31040 (TW); Chang, Chao-Chin, Taichung Hsien (JP)
(72) Inventor: Chang, Chao-Chin, Taichung Hsien (TW); Chen, Chen-Kun, Changhua Hsien (TW); Yu, Yu-Chen, Wan-Hua District aipei (TW); Chu, Mu-Tao, Hsinchu (TW)
(74) Representative: Gee, Steven William

(57) **Abstract**

Disclosed is a system and method for technical document analysis. The system comprises an internal database and a technical document analysis module. The technical document analysis module links with at least an original database, and may fetch the original data from the original database and analyzes the original data. The partial data of the original data with regularity and preliminary index act as primary identifiers. According to the relationship between the other part of the original data and the primary identifiers, the original data are converted into a plurality of sub-data. After being compared with the contents of the relationship database, the whole sub-data may be stored in the relationship database or only their renew portion may be stored in the internal database.

## Description

### FIELD OF THE INVENTION

The present invention generally relates to a system and method for technical document analysis, and patent analysis system.

### BACKGROUND OF THE INVENTION

The contemporary technical documents are scattered among different databases around the world, with each database stores different technical documents, such as patents and research papers. The research and development team usually requires searching and reading a lot of technical documents in the initial phase of the technology development. How to effectively integrate the current resources in the databases and provide effective analysis to the contents and the trends in the technical documents remains an important issue.

FIG. 1 shows a Taiwan Patent Publication 200417882, disclosing a method for generating patent analysis data. Based on the inquiry condition to search external databases, such as patent publication database, the method searches and captures a plurality of patents or classification numbers and uses the data in the patent publication data to perform statistic computation, analysis and permutation to generate technical feature tables, applicant tables, technological trend tables, pie chart and bar chart, and so on, for patent analysis and relevance identification.

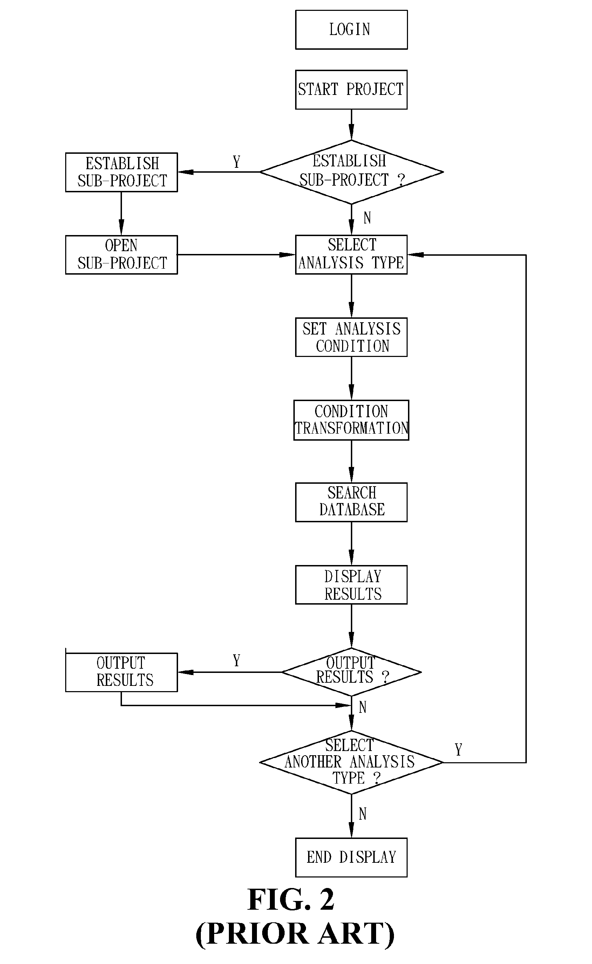

FIG. 2 shows a flowchart of Taiwan Patent No. 567432 of a system and method for mining and statistical analyzing patent information. In FIG. 2, the user selects analysis type and sets the analysis conditions through a user interface. The analysis conditions are translated by the application software server into inquiry conditions of specific format. The inquiry conditions are used to search the database, and the search result is transmitted by the application software server to the client computer to display the analysis result, such as a statistic chart.

### SUMMARY OF THE INVENTION

The disclosed exemplary embodiments of the present invention may provide a system and method for technical document analysis, which utilize the technology of internal database (typically, relationship database) to integrate the technical documents from a plurality of original database to form a technical document network so as to achieve the indexing and analysis of technical documents.

In an exemplary embodiment, the disclosed is directed to a system for technical document analysis. The system comprises an internal database (preferably, a relationship database) and a technical document analysis module. According to at least an index condition from the user's input and through at least a original database link, the technical document analysis module may fetch the original data from the original database and analyzes the original data. The partial data of the original data with regularity and preliminary index act as primary identifiers. According to the relationship between the other part of the original data and the primary identifiers, the original data are converted into a plurality of sub-data. After being compared with the contents of the internal database, the plurality of sub-data may be stored in the internal database or only their renew portion may be stored in the internal database.

In another exemplary embodiment, the disclosed is directed to a method for technical document analysis. The method comprises: according to at least an input index condition, fetching a plurality of original data of technical documents from at least a original database; analyzing the plurality of original data to construct an internal database (preferably, a relationship database), including using the partial data of the original data with regularity and preliminary index as primary identifiers; according to the relationship between the other part of the original data and the primary identifiers, converting the original data into a plurality of sub-data; and after compared the plurality of sub-data with the contents of the internal database, storing the plurality of sub-data in the internal (relationship) database or only their renew portion in the internal database.

In the exemplary technical document analysis system of the present invention, other modules, such as diagram analysis modules, reading report generation modules, report commenting modules, and authorization management modules, may be added or integrated in addition to the internal database and technical analysis modules. The client side may further integrate or add other modules, such as search module, figure analysis input/output module, reading report input/output module and report commenting platform, and so on to collaborate, display or extend the capabilities generated by the modules within the technical document analysis module so as to enhance the convenience of use at the client end.

The technical document analysis system of the present invention may also provide a management analysis report in a table format. By using a simple manner to display various combinations of the X-dimension and Y-dimension of the statistic diagrams, the present invention allows the user to request the corresponding data analysis field to execute directly according to the requested combinations of X-dimension and Y-dimension of the statistic diagrams, so as to obtain a two-dimensional or three-dimensional analysis diagram. Therefore, when applied to analysis system of technical documents, such as patents or research papers, the present invention may solve the problem that the user may be unfamiliar with long and tedious terminology while operating the technical document analysis system so that patent or technical document analysis may be popularized.

When further combined with relationship database, the aforementioned exemplary embodiments may change the state of the original data and reorganize as data group with relationship correspondence to greatly reduce the system resources consumed by the system when generating analysis diagrams.

The foregoing and other features, aspects and advantages of the present invention will become better understood from a careful reading of a detailed description provided herein below with appropriate reference to the accompanying drawings.

### BRIEF DESCRIPTION OF THE DRAWINGS

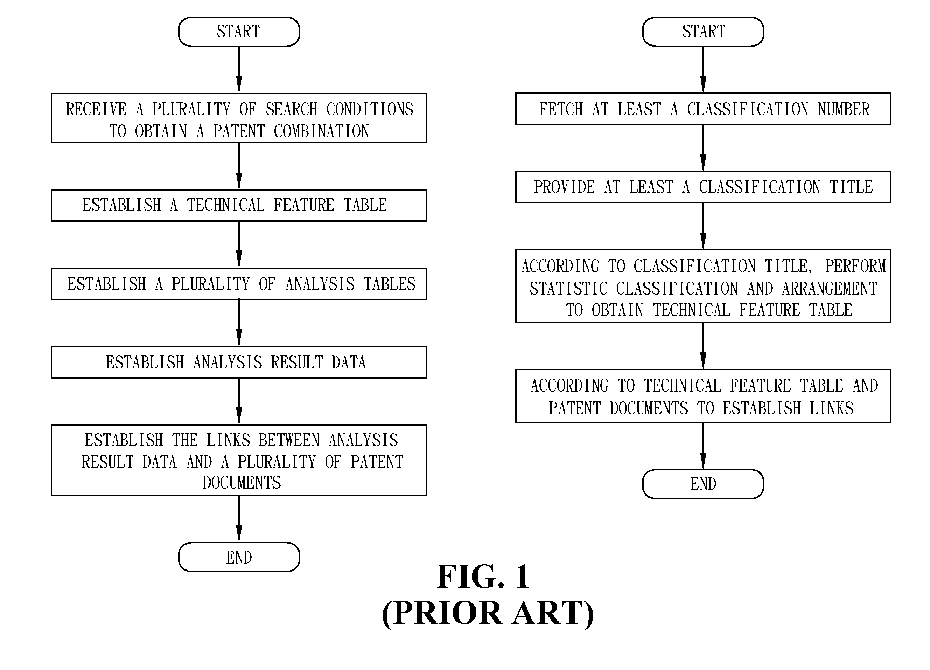

FIG. 1 shows an exemplary flowchart of a method for generating patent analysis data.

FIG. 2 shows an exemplary flowchart of a system and method for mining and statistical analyzing patent information.

FIG. 3 shows an exemplary schematic view of a technical document analysis system, consistent with certain disclosed embodiments of the present invention.

FIG. 4 shows an exemplary schematic view of the structure of a technical document analysis module, consistent with certain disclosed embodiments of the present invention.

FIG. 5A shows an exemplary initial table of the original data of the patent document in the original database fetched by a data fetch module, consistent with certain disclosed embodiments of the present invention.

FIG. 5B shows an exemplary analyzed table obtained by the technical document analysis module, consistent with certain disclosed embodiments of the present invention.

FIG. 6A shows an exemplary flowchart of a technical document analysis method, consistent with certain disclosed embodiments of the present invention.

FIG. 6B shows an exemplary schematic view illustrating how to operate the search and data fetch by the technical document analysis system, consistent with certain disclosed embodiments of the present invention.

FIG. 7 shows an exemplary schematic view of the technical document analysis system and the client end further integrating or adding other modules, consistent with certain disclosed embodiments of the present invention.

FIG. 8 shows an exemplary schematic view of the collaborated operation of figure analysis input/output module of the client end, diagram analysis module and internal database of the technical document analysis module, consistent with certain disclosed embodiments of the present invention.

FIG. 9 shows an exemplary flowchart illustrating the operation of the diagram analysis module, consistent with certain disclosed embodiments of the present invention.

FIG. 10A shows the receivable analysis result to the client with figure analysis input/output module, consistent with certain disclosed embodiments of the present invention.

FIG. 10B shows an exemplary management analysis report of FIG. 10A to describe the selectable fields for the users of the figure analysis input/output module, consistent with certain disclosed embodiments of the present invention.

FIG. 11 shows an exemplary schematic view of the collaborated operation of reading report input/output module at the client end, reading report generation module and relationship database of the technical document analysis system, consistent with certain disclosed embodiments of the present invention.

FIG. 12 shows an exemplary flowchart illustrating the operation of reading report generation module, consistent with certain disclosed embodiments of the present invention.

FIG. 13 shows an exemplary operating flow illustrating the interaction between the client end and the reading report generation module, consistent with certain disclosed embodiments of the present invention.

FIG. 14 shows an exemplary schematic view of the technical document analysis system of FIG. 11 further integrating a report commenting module and the client end further integrating a report commenting platform, consistent with certain disclosed embodiments of the present invention.

FIG. 15 shows an exemplary schematic view of the client end integrated with an attorney reading interface in the technical document analysis system of FIG. 7, consistent with certain disclosed embodiments of the present invention.

### DETAILED DESCRIPTION OF THE PREFERRED EMBODIMENTS

The exemplary disclosed embodiments of the present invention may integrate a plurality of original databases, such as patent databases and thesis/dissertation databases, and so on. The original technical documents are systematically analyzed and re-arranged into a data group of corresponding relevance. A series of analyzable statistic string tables may be generated to construct an internal database for the user to search and index rapidly.

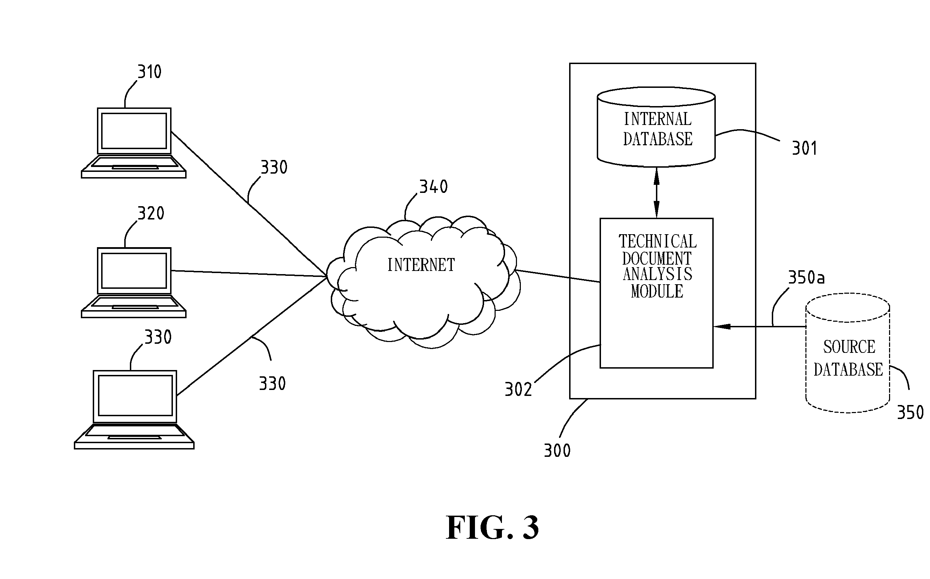

FIG. 3 shows an exemplary schematic view of a technical document analysis system, consistent with certain disclosed embodiments of the present invention. As shown in FIG. 3, a plurality of clients 310, 320, 330 utilize technical document analysis system 300 via connection, such as Internet 340, to accomplish the search and analysis of the technical documents in at least an original database 350.

Refer to the exemplary embodiment of the system in FIG. 3, technical document analysis system 300 may comprises an internal database 301 and a technical document analysis module 302. Based on at least a search condition inputted by the user, marked as 330, technical document analysis module 302 links to original database 350 and fetches a plurality of original technical documents 350a from original database 350, and then performs system analysis on original technical documents 350a. The partial data of original data 350a with regularity and preliminary index may be permutated to act as primary identifiers. According to the relationship between the other part of original data 350a and the primary identifiers, the original data are converted into a plurality of sub-data. After being compared with the contents of the internal database, the plurality of sub-data may be stored in the internal database 301 or only their renew portion may be stored in internal database 301. Internal database is preferably embodied with a relationship database.

Original data 350a of original database 350 may include patents, research papers or their combinations thereof. Internal database 301 may be a module with logical computation capability. The original data of original database 350, after analyzed by technical document analysis module 302, is re-arranged so that the originally many-to-many, one-to-many and one-to-one mappings are rearranged to data groups with relationships, including one-to-one, one-to-many, many-to-many, or formed by text databases.

Clients 310, 320, 330 may be connected to technical document analysis system 300 in many manners, such as through Internet, LAN, direct link to the host, or internal connections of the host, such as IDE, SATA PATA, OLE, ODBC, and so on. Technical document analysis module 302 and original database 350 may also be connected in similar many manners. Technical document analysis system 300 may be a server. Original database 350 may be a physical database external to technical document analysis system 300, or a storage device, such as hard disk, tape or CD, storing data and is located on the same host or server.

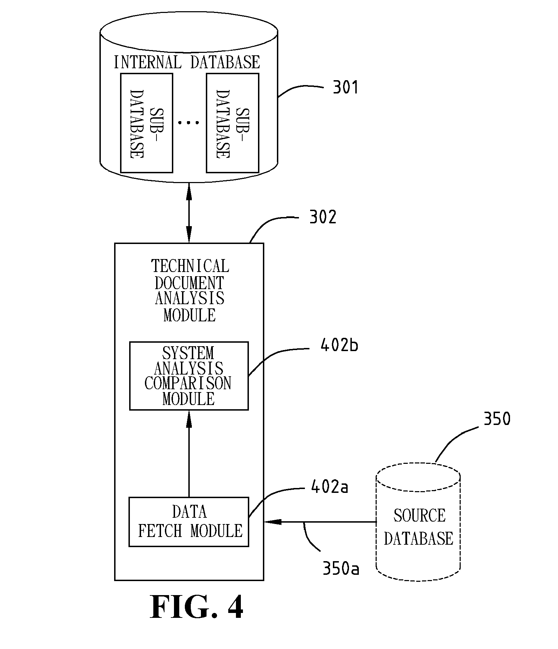

FIG. 4 shows an exemplary schematic view of the structure of a technical document analysis module, consistent with certain disclosed embodiments of the present invention. As shown in FIG. 4, technical document analysis module 302 may include a data fetch module 402a, and a system analysis and comparison module 402b. After data fetch module 402a fetches a plurality of original data 350a of original database 350, original data 350a are sent to system analysis and comparison module 402b. System analysis and comparison module 402b performs system analysis on original data 350a and performs one or more Boolean logic operations, such as AND, OR, NOT, ANDNOT, ORNOT, etc. After comparison with the data in internal database 301, the analyzed and operated data are transformed into a plurality of sub-data. The sub-data are then used to update internal database 301 or be stored in internal database 301.

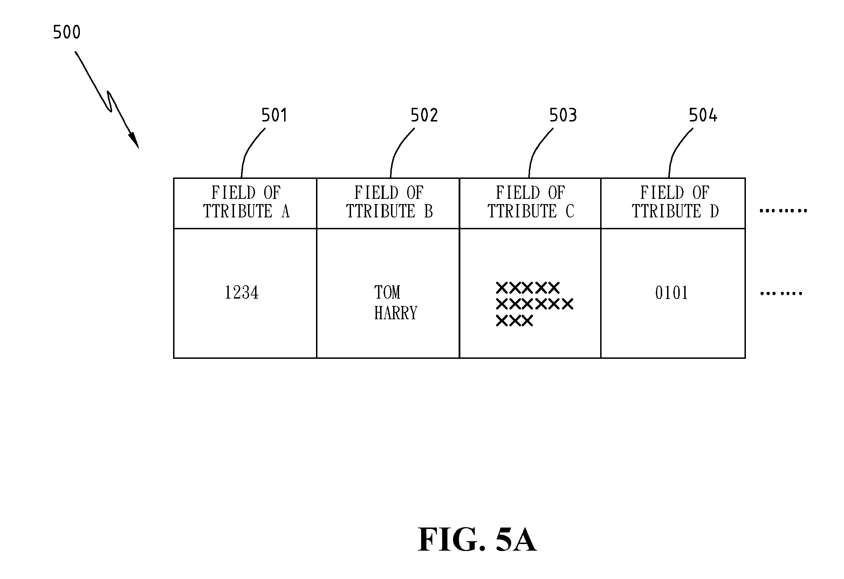

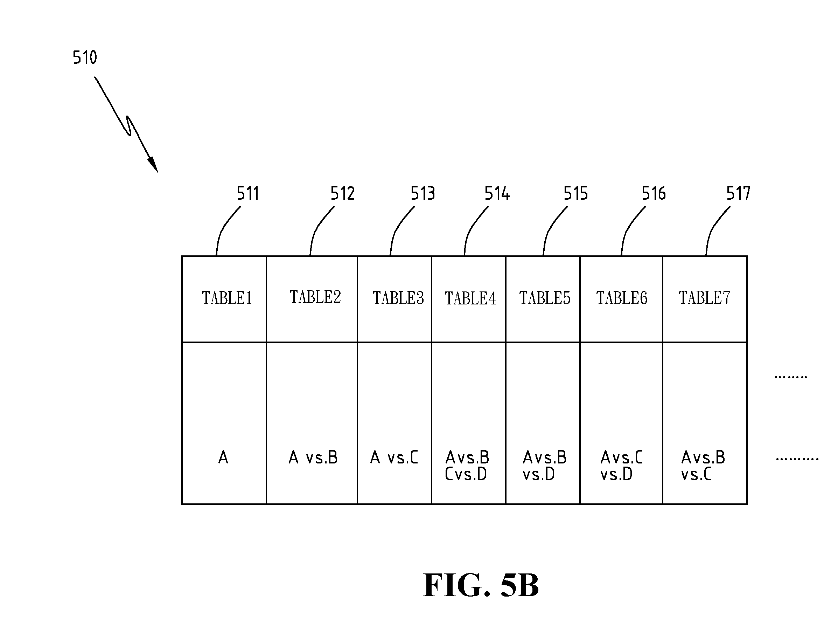

The sub-data compared by technical document analysis module 302 are the relationship data constituted with one or more new fields formed by analyzing and programming a plurality of fields of original data 350a, then combining. FIGS. 5A and 5B show the contents of a plurality of exemplary sub-data.

FIG. 5A shows an exemplary initial table of the original data of the patent document in the original database 350 fetched by data fetch module 402a, consistent with certain disclosed embodiments of the present invention. As shown in FIG. 5A, exemplary initial table 500 may include a plurality of attribute fields, such as attribute fields 501-504. Field 501 of attribute A, for example, may be a number field. Field 502 of attribute B, for example, may be an inventor field. Field 503 of attribute C, for example, may be a text data field. Field 504 of attribute D, for example, may be a data field. A field is a data stored in the database that is configured or may be accessed data address.

Field 501 of attribute A, for example, may be the patent publication number, patent number, patent application number, and so on. Because a patent corresponds to a patent number, a patent publication number or a patent application number, the data in field 501 of attribute A will form a one-to-one relationship with the original data of the patent document if field 501 of attribute A is specified as one of the above numbers. Field 502 of attribute B may be an inventor field. Because a patent may correspond to one or more inventors, field 502 of attribute B forms a one-to-many relationship with the original data of the patent document. Field 503 of attribute C is a text data field, such as independent claims or abstract. Hence, the patent corresponds to the patent independent claims or patent abstract field. Field 504 of attribute D may be patent publication date or patent application date, and so on. Because a plurality of patents may correspond to a patent publication date or a patent application date, the data in field 504 of attribute D forms a many-to-many relationship with the original data of the patent documents. Therefore, if the original data is a patent document, these attribute fields are the fields in the patent document.

If the original data is a research paper, because a research paper corresponds to a research title, first attribute field 501 may be a research title, which has a one-to-one relationship with the research paper. Because a research paper may correspond to one or more authors, second attribute field 502 may be the author field, forming a one-to-many relationship with the research paper. Third attribute field 503 may be a text data field, such as paper abstract or paper content. Because a plurality of research papers may correspond to a publication date, fourth attribute field 504 may be a field of paper publication date and forms a many-to-many relationship with the research paper.

FIG. 5B shows an exemplary analyzed table obtained by the technical document analysis module 302, consistent with certain disclosed embodiments of the present invention. Referring to FIG. 5B, data fetch module 402a fetches an original data table of the original data in the original database, such as initial table 500 of FIG. 5A. System analysis and comparison module 402b first classifies the attribute fields and then translate initial table 500 into exemplary analyzed tables 510 via a system analysis method. Exemplary analyzed tables 510 include seven tables, marked as 511 to 517. Tables 511 to 517 are possible combinations of the data in fields 501-504. Analyzed tables 510 may translate the one-to-many, many-to-many or one-to-one relationships in initial table 500 into different one-to-one, one-to-many, or many-to-many relationships.

Take patent documents as an example to explain analyzed tables 500 in FIG. 5B. Table 511 is the one-to-one application number field (attributed A). Table 512 is the corresponding relationship between application number field (attribute A) and inventor field (attributed B). Table 4 is the relationship between application number field (attribute A) and inventor field (attribute B), and the relationship between patent abstract field (attribute C) and patent date (attribute D).

In original database 350, the fields of different attributes of the initial table are the data address stored in the database. The bit lengths of fields in the initial table depend on the operating system (OS) or data source. The minimum data block may be 1 bit, 4 bits, 8 bits, 32 bits, 64 bits, and so on.

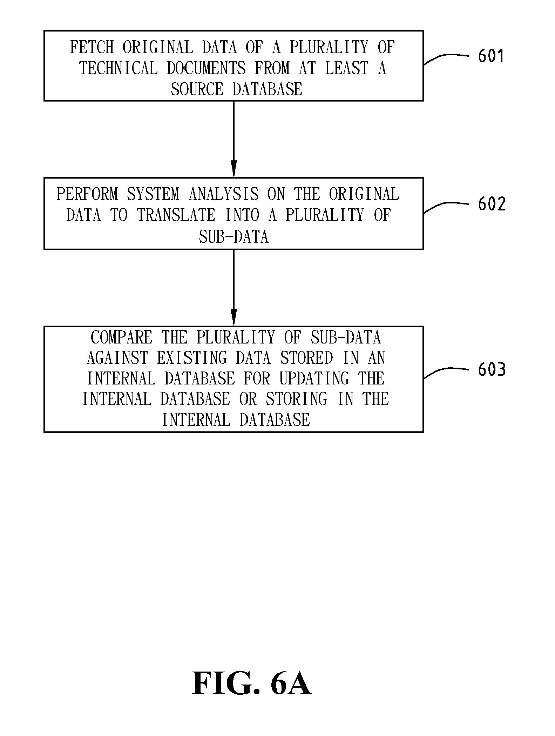

FIG. 6A shows an exemplary flowchart of a technical document analysis method, consistent with certain disclosed embodiments of the present invention. Referring to FIG. 6A, in step 601, technical document analysis module 302 fetches a plurality of original data from original database 350. In step 602, system analysis is performed on the original data and translated into a plurality of sub-data. Step 602 may include utilizing the partial data of the original data with regularity and preliminary index to act as primary identifiers, and converting original data 350a into a plurality of sub-data according to the relationship between the other part of the original data and the primary identifiers.. In step 603, the sub-data is compared against the existing data in internal database 301, and the sub-data may be stored in or used to update internal database 301.

In step 603, after the comparison, only the different portion or modified portion may be sent to the internal database.

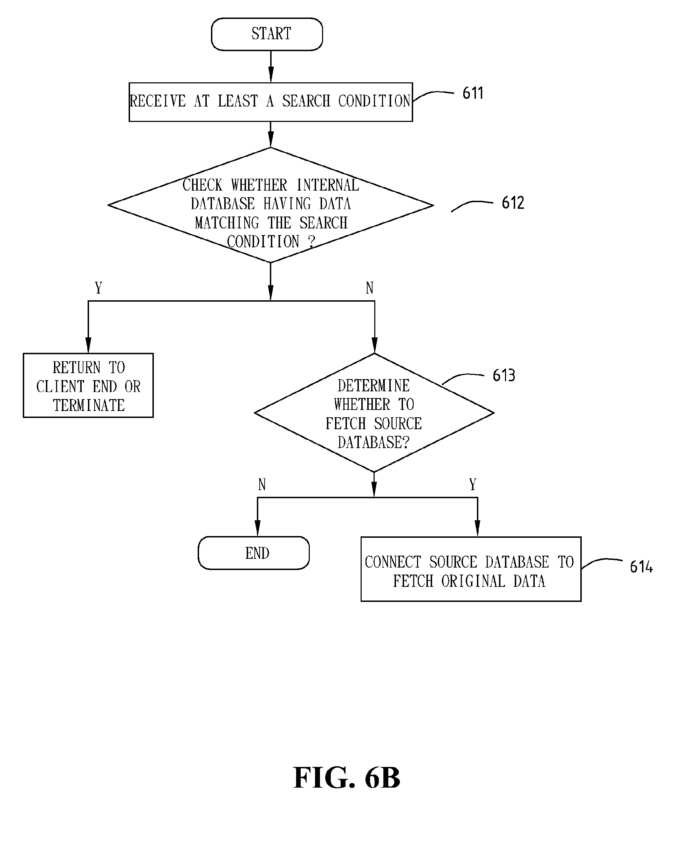

When a client issues a search condition request to technical document analysis system 300, FIG. 6B further shows an exemplary schematic view illustrating how to operate the search and data fetch by the technical document analysis system 300, consistent with certain disclosed embodiments of the present invention. Referring to FIG. 6B, technical document analysis system 300 receives at least a search condition, as shown in step 611. Technical document analysis system 300 checks whether there exists data in internal database 301 matching the search condition, as shown in step 612. If so, the data matching the search condition are sent to the client and the search is terminated; otherwise, whether to fetch original database 350 is determined, as shown in step 613.

If fetch original database 350 is determined, then original database 350 is connected to fetch original data 350a according to the search condition, as shown in step 614.

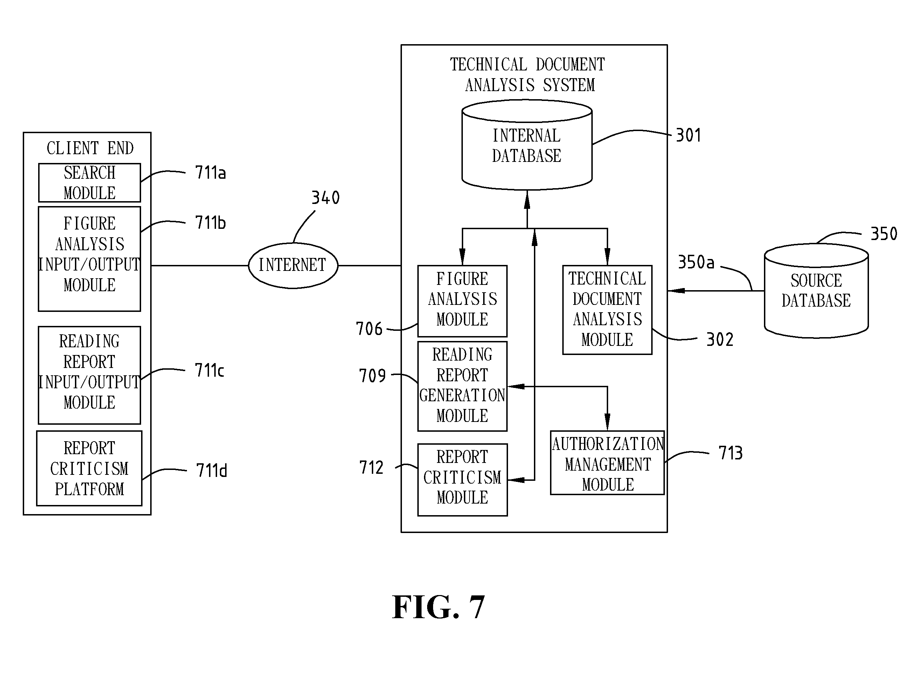

As shown in FIG. 7, technical document analysis system 300 of the present invention may further include or integrate other modules, such as, diagram analysis modules 706, reading report generation module 709, report commenting module 712, and authorization management module 713, in addition to internal database 301 and technical document analysis module 302. The client end may also add or integrate other modules, such as search module 711a, a figure analysis input/output module 711b, a reading report input/output module 711c, and a report commenting platform 711d, to collaborate, display or extend the capabilities generated by modules within technical document analysis module 302 and enhance the convenience of use to the client end.

For example, search module 711a may provide the client for inputting search condition. Take patent document search as example. The search condition may be any of the fields of the patent document, such as patent application number, patent publication number, assignee, nationality of assignee, inventor, nationality of inventor, title, abstract, patent independent claims, international patent classification number, US patent classification number, technical classification number product classification number, and so on.

Diagram analysis module 706, report commenting module 712 and technical document analysis module 302 may all fetch or analyze the original data in original database 350 so as to enrich the contents of internal database 301.

The following describes the function and operation of diagram analysis module 706, reading report generation module 709, report commenting module 712 and authorization management module 713.

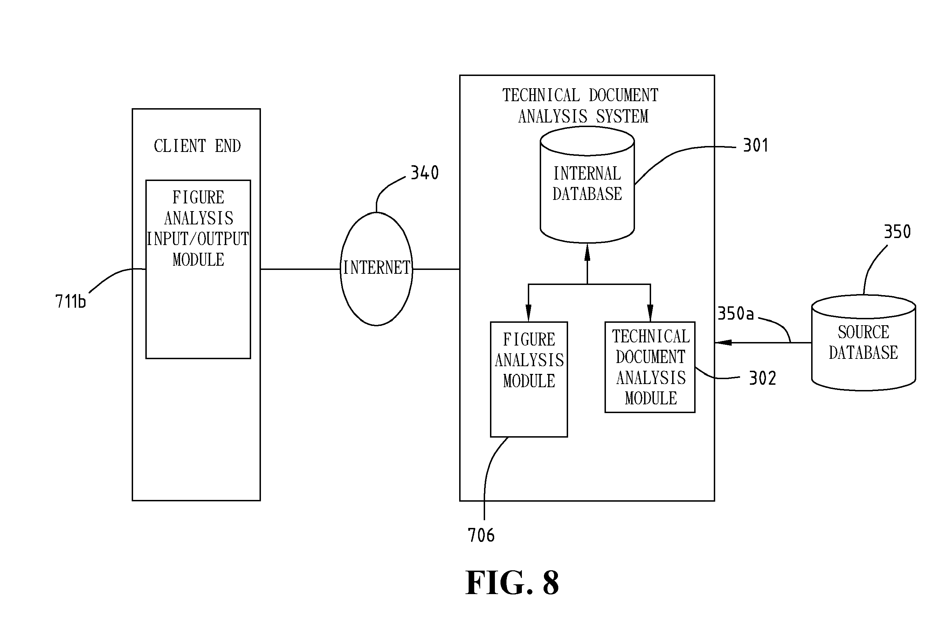

FIG. 8 shows an exemplary schematic view of the collaborated operation of figure analysis input/output module of the client end, diagram analysis module and internal database 301 of the technical document analysis module 302, consistent with certain disclosed embodiments of the present invention. Referring to FIG. 8, the client end connects to technical document analysis system 300 through network. In technical document analysis system 300, diagram analysis module 706 is connected to internal database 301. Diagram analysis module 706 may be a statistic computation module to receive instruction from the client end, such as search condition, and to execute relationship computation and analysis in internal database 301, including executing search, parameter relationship analysis and computation, statistic computation of each parameter's relative relationship, and so on, and then generates analysis report, such as text data, line figures, curve figures and three-dimensional figures. The client end has a corresponding figure analysis input/output module 711b for connecting to diagram analysis module 706.

Figure analysis input/output module 711b sends the client's instruction to technical document analysis system 300 so that diagram analysis module 706 and internal database 301 may perform relationship computation and generate analysis report. Figure analysis input/output module 711b allows the client end to input search condition or the fields for analysis, as well as displays the analysis report generated by diagram analysis module 706. Alternatively, based on the user's requirements, figure analysis input/output module 711b may output the analysis result to different formats, such as Excel format, so that the statistics may be directly cited.

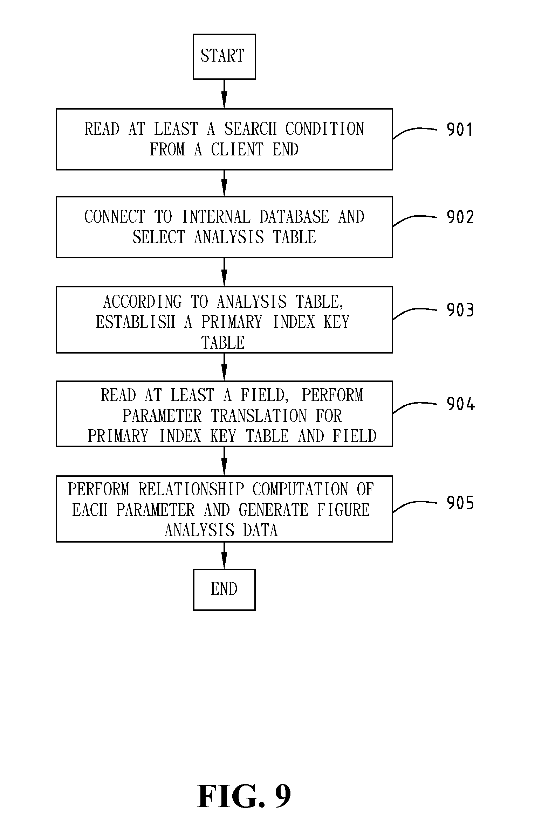

FIG. 9 shows an exemplary flowchart illustrating the operation of the diagram analysis module, consistent with certain disclosed embodiments of the present invention. Referring to FIG. 9, diagram analysis module 706 reads at least a search condition from the client end, as shown in step 901. Take the patent document as an example. The search condition may be keywords or any fields of the patent document, such as patent application number, patent publication number, assignee, assignee nationality, inventor, inventor nationality, title, abstract, patent independent claims, international patent classification number, US patent classification number, technical classification number, product classification number, and so on.

In step 902, it is to connect to internal database 301 and select analysis table. The analysis table may be selected according to the search condition.

In step 903, a primary index key table is established according to the analysis table. For example, the application number field of the analysis table may be used as the primary index key to establish the relationship table between the application number field and other related fields. The generated primary index key table may be stored in technical document analysis system 300 or returned to the client end.

In step 904, at least a field is read and parameter translation is performed from the primary index key table and the at least a field. The at least a field may be selected by the client, for example, the inventor versus the assignee relationship. The parameter translation is described as follows. For example, the inventor field of the patent document versus the application number field of the primary index key may be a parameter, and the assignee field versus the application number field of the primary index key may also be a parameter. Take the patent document as an example. The definition of a parameter is not restricted to the field versus the primary index key. The parameter may also be the higher order computed data, such as, data ratio, the number of persons, standard deviation, average, and so on.

In step 905, the relationship computation of each parameter is performed and the figure analysis tables are generated. The generated figure analysis data may also be returned to the client.

By using the parameter relationship to compute the figure analysis data the computation time may be reduced and the higher order statistic data may be computed more rapidly. Take the patent document as example. Not only the statistics on the single field, such as the number of the patents by each inventor, or the number of the assignees, may be computed, but also the higher order statistics, such as the relationship between each assignee and each inventor, the relationship between each international patent classification number and the number of the patents of each year may be computed.

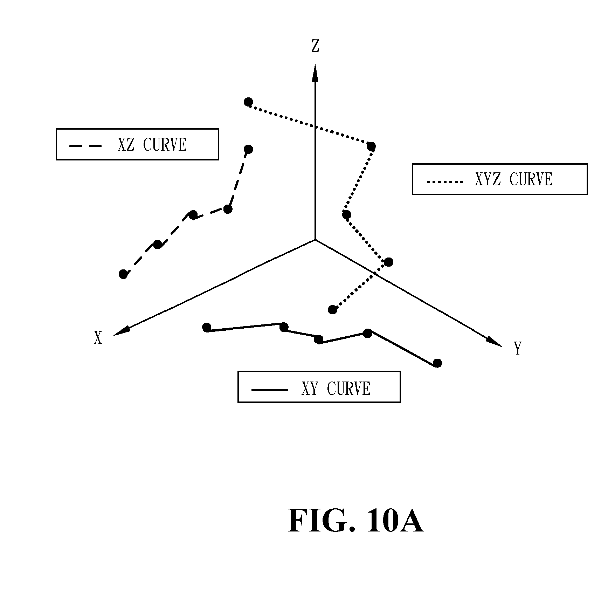

FIG. 10A shows the receivable analysis result to the client with figure analysis input/output module, consistent with certain disclosed embodiments of the present invention. Referring to FIG. 10A, the analysis result may comprise 2-dimensional, 3-dimensional figures or report analysis data. The data may be analyzed by 3-dimensional fields (such as X, Y, Z) or 2-dimensional field combinations (such as XY combination analysis figure or report, XZ combination analysis figure or report, XYZ combination analysis or report). Take patent document as an example. X or Y field may be the number of patents, assignee, patent nationality, inventor, year, international patent classification number, US patent classification number, patent agent, examiners, product classification, technical classification, and so on. The Z field may be computed higher order data, such as data ratio, the number of persons, standard deviation, average, and so on.

The variable information in the fields, such as assignee, inventor, claims, may be connected to the original database for updating. The number of the patents may utilize the concept of the patent family, such as, treating the patent family of the same parent application as the same patent.

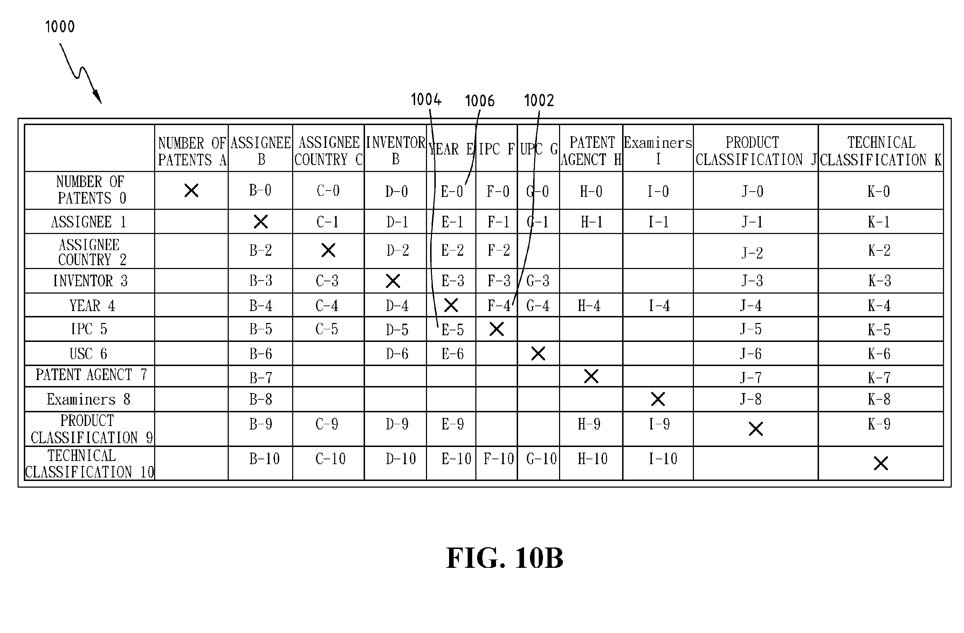

FIG. 10B shows an exemplary management analysis report of FIG. 10A to describe the selectable fields for the users of the figure analysis input/output module, consistent with certain disclosed embodiments of the present invention. Referring to FIG. 10B, the client may select from management analysis report 1000 the required X-dimension field, such as number of patents A, assignee B, assignee country C, inventor D, year E, (this field may be extensible to month or day if necessary), international patent classification number F, US patent classification number G, patent agent H, examiners I, product classification J, technical classification K, and Y-dimension field, such as number of patents 0, assignee 1, assignee country 2, inventor 3, year 4, international patent classification number 5, US patent classification number 6, patent agency 7, examiners 8, product classification 9, technical classification 10, to form the analysis results for the combinations of XYZ, XZ, YZ.

For example, by selecting the combination of international patent classification F (IPC F) versus year 4 of analysis field F-4 (marked as 1002), the distribution of the number of patents versus each international patent classification number may be found, and the 3-dimensional XYZ combination analysis figure may be obtained. If the combination of year E versus IPC 5 of analysis field E-5 (marked as 1004) is selected, the distribution of the IPC in each year may be obtained, and the 3-dimensional XYZ combination analysis figure may be obtained. The difference between these two analysis figures is the interexchange of the XY dimension. The client may also simply use the combination of XZ or YZ to analyze, such as, selecting year E and number of patents 0 field of analysis field E-0 (marked as 1006), to obtain the distribution of the number of patents in each year and the XZ combination analysis figure. Therefore, the client may adjust, add or delete the field of each dimension according to the requirements.

Another exemplary embodiment of FIG. 10B may be a management analysis report using the example of FIG. 10A. The report is generated by another exemplary embodiment of the technical document analysis system of the present invention. The technical document analysis system comprises a diagram analysis module 706 and a diagram analysis input/output module 711b. Diagram analysis module 706 is connected to a database and diagram analysis input/output module 711b generates management analysis report 1000. The database may be the original database, internal database or the relationship database, or their any combinations thereof. In this exemplary embodiment, the original database 350 provides original data 350a to the technical document analysis system having technical data analysis module 302, diagram analysis module 706 and internal database 301 (such as relationship database).

Management analysis report 1000 generated by diagram analysis input/output module 711b includes an X-dimension field, a Y-dimension field and a plurality of data combination analysis fields, where the X- dimension field and Y- dimension field are selected from a group, including at least two of the following: number of patents, assignee, assignee country, inventor, inventor country, application time, priority time, publication time, patent issue time, IPC number, US Patent classification number, agency, examiners, product classification or technical classification. The data analysis combination field is used to drive diagram analysis module 706 so that diagram analysis input/output module 711b may output the combination analysis diagram according to the one-dimensional, two-dimensional or three-dimensional combination analysis diagram generated in accordance with the data of the database. In general, the combination and the permutation order of the X- dimension field and the Y-dimension field are the same. The two-dimensional or three-dimensional combination analysis diagram generated by using data combination analysis field to drive the diagram analysis module has the X-axis and Y-axis with the same content as the corresponding X-dimension field and Y-dimension field.

In other words, when X-dimension field selects assignee B and Y-dimension field selects Number of Patents 0, the two-dimensional combination analysis diagram generated by diagram analysis module 706 driven by data combination analysis field B-O is a diagram with assignee as the X-axis and number of patents as Y-axis. Before generating the diagram, the system may be configured automatically or manually to filter out the data without displaying under a certain condition, e.g., when the number of data is less than 3, so that the diagram is clear and easy to read. In another exemplary embodiment, if the X-dimension field selects IPC F and Y-dimension field selects Number of Patents 0, the F-0 field will drive the diagram analysis module to generate either two-dimensional IPC (X-axis) vs. number of patent (Y), or three-dimensional IPC vs. number of patents in each year. The above embodiment shows that the user can intuitively analyze the statistics of the patents. To make the management analysis report even more convenient to use and to reduce the possibility that the user may read the wrong column or row, the management analysis report can be colored in different colors for distinguishing.

In addition, the meaningless part of the data combination analysis fields of the management analysis report will be left blank, or marked with X or other symbols or drawings; alternatively, if a meaningless data combination analysis field, e.g., A-0, is indicated as the usual style, a warning message will pop-up when selected to inform the user that the selection will not be executed, and is unable to drive diagram analysis module 706 to generate two-dimensional or three-dimensional combination analysis diagram. The preferred shape of the management analysis report is shown in FIG. 10B as a rectangular table. The appearance of the table can also be designed to suit the user's preference in terms of shape and color, while keeping the underneath technology unchanged.

In summary, the exemplary embodiment of the present invention may be designed as a easy-to-read analysis system for patent or research paper to solve the long-time problem of patent or research paper statistic analysis to provide convenience of use to the users. The patent or research paper analysis system includes an original database 350, for providing original data 350a, a diagram analysis input/output module 711b, for transmitting a client's instruction to a technical document analysis system 300 and displaying the report from technical document analysis system 300 on the client's end, where technical document analysis system 300 includes a diagram analysis module, a technical document analysis module and a relationship database. The diagram analysis module is to perform relationship computation and analysis with the relationship database according to the client's instruction, i.e., patent or research paper analysis condition, such as, within a specific application period or keywords in a specific abstract. Technical document analysis module 302 is connected to original database 350 for fetching original data 350a from original database 350, updating or storing into the relationship database. The technical document analysis module may arrange the original data into a partial data with regularity and preliminary index to act as primary identifier, and based on the relationship, original data 350a may be converted into a plurality of sub-data. After comparing the sub-data, the technical document analysis module is updated or stored in the relationship database. The original data, after being converted into data groups with corresponding relationship, including one-to-one, one-to-many, many-to-many, or text, is updated or stored in the relationship database.

Furthermore, after the diagram analysis input/output module and relationship database performing relationship computation and analysis, the above patent or research paper analysis system provides a management analysis report for the user to input. The report includes an X-dimension field, a Y-dimension field and a plurality of data combination analysis fields, where the X-dimension field and the Y-dimension field are selected from a group, including at least two of the following: number of patents, assignee, assignee country, inventor, inventor country, application time, priority time, publication time, patent issue time, IPC number, US patent classification number, agency, examiners, product classification or technical classification. The users may select the fields for analysis for the subsequent analysis according to their requirements.

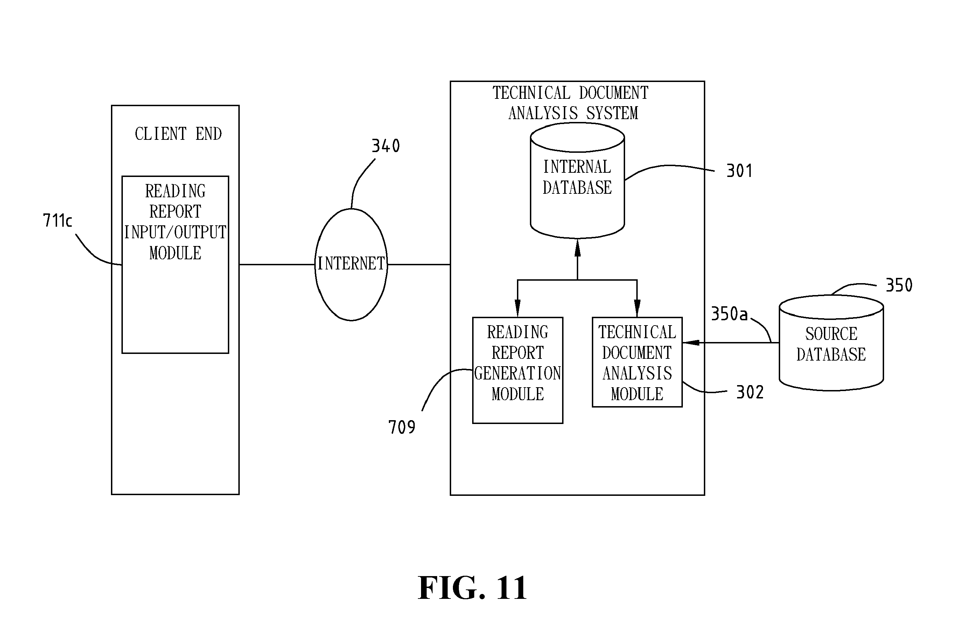

FIG. 11 shows an exemplary schematic view of the collaborated operation of reading report input/output module at the client end, reading report generation module and relationship database of the technical document analysis system, consistent with certain disclosed embodiments of the present invention. Referring to FIG. 11, the client end connects to technical document analysis system through networks (including both external network and internal ports of the host). Reading report input/output module 711c is integrated into the client end, and reading report generation module 709 is integrated into technical document analysis system and is connected to internal database 301, such as relationship database.

Reading report generation module 709 may be a data combination module for organizing, based on the instruction of the client end, the related contents of relationship database to generate the reading report.

Reading report input/output module 711c is connected to reading report generation module 709, and transmits client's instruction to technical document analysis system, then through reading report generation module 709 to internal database 301, such as relationship database, for computation, and finally outputting reading report.

Reading report generation module 709 may generate the preliminary table of contents of the reading report excerpt according to search conditions, and transmit the preliminary table to the client end. The transmission of the preliminary table does not include a large amount of the entire text. Instead, after the client selects the required reading report, the complete text data of the reading report is then transmitted. Therefore, the large data flow between technical document analysis system 300 and the client end may be avoided. In addition, the integration with interactive report commenting platform may also be done to improve the efficiency of reading technical data and sharing of the comments.

Reading report input/output module 711c of the client end allows the client to input search condition. Take [patent document as an example. The search condition may be patent application number, patent publication number, assignee, assignee nationality, inventor, inventor nationality, title, abstract, patent independent claims, international patent classification number, US patent classification number, technical classification number, product classification number, and so on.

Reading report input/output module 711c may further receive the patent technical document selected for reading by the table of contents returned by technical document analysis system. The table of contents of patents may include patent publication number, patent application number, assignee, patent title, application date, patent family, self-reference number, other-reference number, number of total references, product classification number, technical classification number, and so on, and may be adjusted in accordance with the requirements. After the patent documents are selected, the text of the reading report may be displayed.

Reading report text may include two parts. The first part is the built-in basic information of patent technical documents, such as patent application number, patent application date, patent number, patent issue date, patent publication number, patent publication date, the earliest priority date, patent type, title, assignee, inventor, patent family, abstract, independent claims, and so on. The second part includes the invention summary and description written by the client after reading the technical documents, such as, prior art technical background, the description of the present case, industrial impact, product impact, patent avoidance possibility, and so on. The client may also judge the importance of the technical document, execute technical or product classification, or establish own technical or product classification groups. The client may also file the read technical documents into the established technical or product classification groups.

Reading report input/output module 711c may access the client's personal report, as well as return to the server for future reading by the client. For example, reading report input/output module 711c may input the personal report of the client after reading the technical document and return the personal report to the server for future access.

The input of the reading report of the second part may utilize the authorization management to control the quality of the reading report. Reading report input/output module 711c also provides the viewing capability of direct viewing original patent document and the capability of outputting the entire reading report, such as, using specific format (e.g., Word) for outputting the reading report to facilitate the reading and modification by the client.

Authorization management module 713 may include a system administrator to manage the authorization of the system users, such as, using the project or database category to control the view, add, modify and delete access rights of the system users.

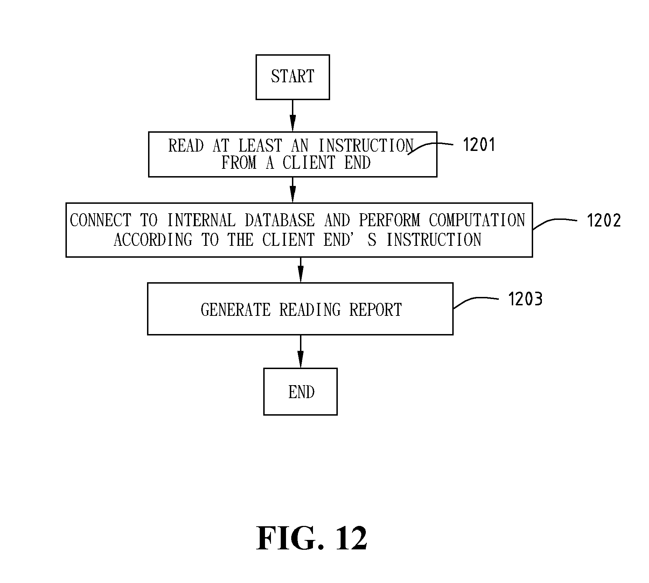

FIG. 12 shows an exemplary flowchart illustrating the operation of reading report generation module, consistent with certain disclosed embodiments of the present invention. Referring to FIG. 12, in step 1201, at least an instruction from a client end is read. In step 1202, internal database 301, such as relationship database, is connected for computation in accordance with the client end's instruction. After the computation, the reading report is generated as shown in step 1203. The generated reading report may be returned to reading report input/output module 711c of the client end.

After connecting to internal database 301, such as relationship database, the preliminary computation, called database pre-stored program computation, may be performed according to the search condition. The pre-stored program computation may simplify the subsequent computation after connecting to internal database 301.

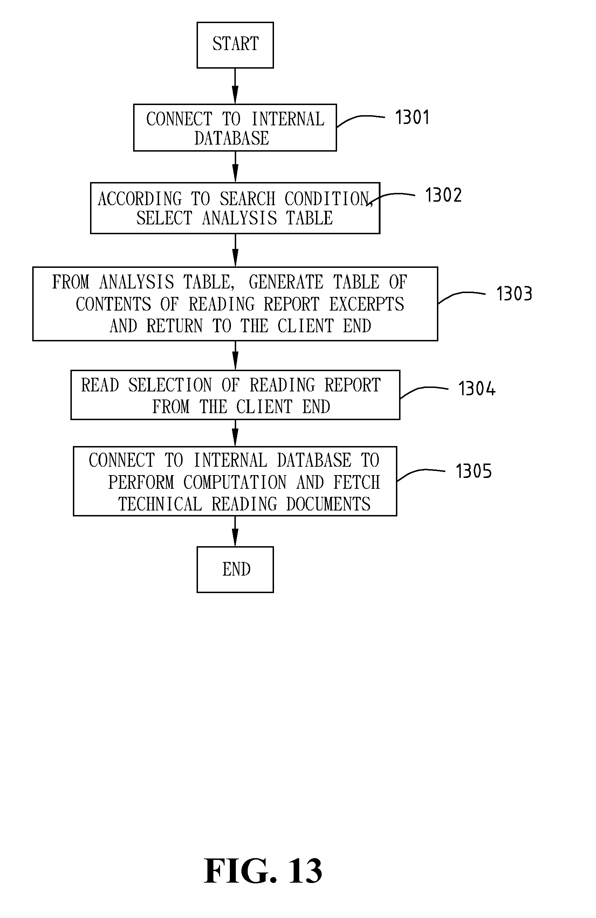

After connecting to internal database 301, such as relationship database, FIG. 13 shows an exemplary operating flow illustrating the interaction between the client end and the reading report generation module, consistent with certain disclosed embodiments of the present invention.

Referring to FIG. 13, in step 1301, reading report generation module 709 connects to internal database 301, such as relationship database. In step 1302, reading report generation module 709 selects analysis table according to the search condition. In step 1303, based on the analysis table, the table contents of reading report excerpt is generated and returned to a client end. In step 1304, reading report generation module 709 reads the reading report selection from the client end. In step 1305 reading report generation module 709 connects to internal database 301, such as relationship database, performs computation and fetches at least a technical reading data.

After reading report generation module 709 reads the reading report selection from the client end, reading report generation module 709 may first perform database pre-stored program computation according to the search condition to simplify the subsequent computation after connecting to internal database 301, such as relationship database.

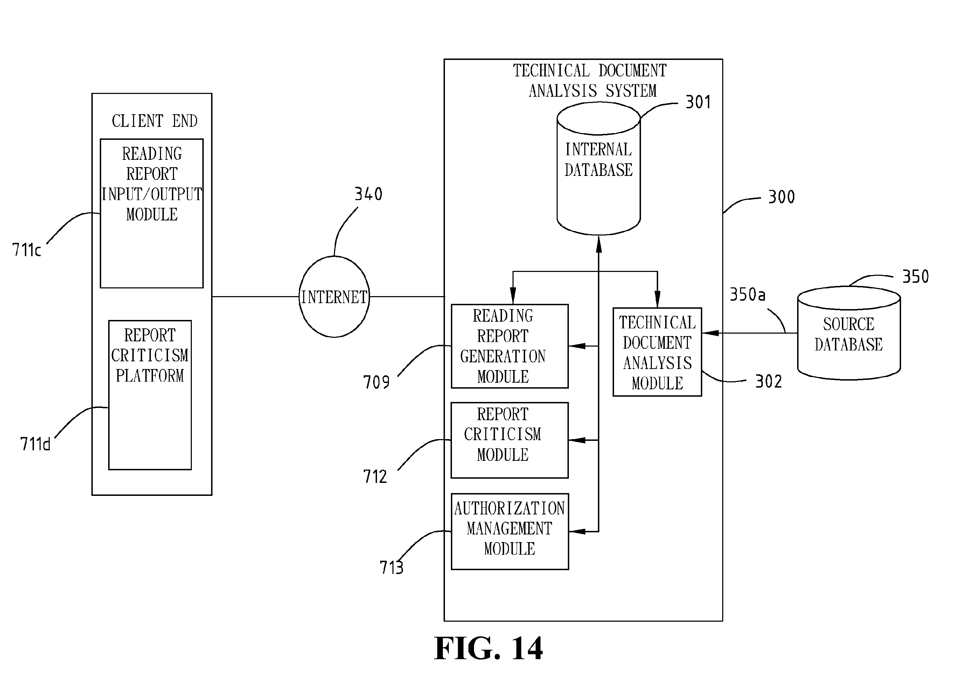

FIG. 14 shows an exemplary schematic view of the technical document analysis system of FIG. 11 further integrating report commenting module 712 and the client end further integrating report commenting platform 711d, consistent with certain disclosed embodiments of the present invention. Referring to FIG. 14, the client end at least includes a reading report input/output module 711c and report commenting platform 711d. The client end connects to technical document analysis system 300 via networks. Technical document analysis system comprises a reading report generation module 709 and a report commenting platform 712, both connected to internal database 301, such as relationship database.

Report commenting module 712 and report commenting platform 711d are connected to each other for receiving the report commenting data from the client end. The report commenting data may be stored in internal database 301, or returned and displayed on report commenting platform 711d.

Report commenting platform 711 d may provide the client end, when reading, with the capability to record the comments and the commenting and the capability to view comment and commenting from other readers; thus, report commenting platform 711 d allows sharing as well as enhancing the reading efficiency of technical documents. Report commenting platform 711d may also send the client's comment and commenting to technical document analysis system 300 or return the data analysis or pre-stored commenting in technical document analysis system 300 to the client end. When the client end expands the reading report, the report commenting may be recorded and readers may reader other readers' commenting, which is similar to the interactive interface of a blog.

Technical document analysis system may further include authorization management module 713. Authorization management module 713 is the system administrator managing the access rights of the system users. Authorization management module 713 may utilize the project or database catalog to control the view, add, modify or delete access rights of the system users, and to manage writing the reading report, publishing and viewing the report commenting by the users. Another exemplary embodiment utilizes authorization management module 713 so that all the users of the system may use reading report input/output module 711c to share the data generated by reading report generation module 711d, but may only use report commenting platform 711d to view the data generated by report commenting module 712 for a specific project, or only specific users are allowed to commentate and analyze through report commenting platform 711d in a specific project.

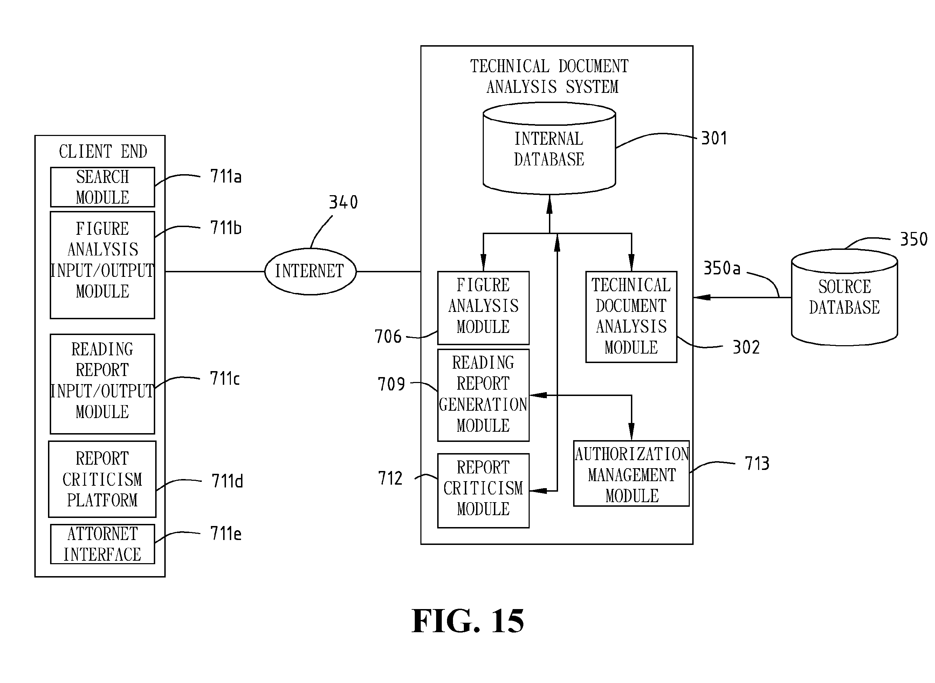

As shown in FIG. 15, the technical document analysis system of the present invention may further include an attorney reading interface 711e, so that the attorney can use the interface to perform confirmation so that the related data, such as reading report or comments, may become basis for seeking legal advice or auxiliary document for legal action. Attorney reading interface 711e is designed to allow authorized personnel or attorneys to login with password and perform the auditing of the data or the results, or perform confirmation, and other interaction. In this manner, the related analysis task or result will be confidential and become the communication media between the attorney and client, thereby being protected under the attorney/client privilege.

The system may further provide an automatic or manual grading and commentating mechanism. In the analysis process, with the results or comments from reading report module or report commentating module, the present invention allows the user to consider the patent application situation and strategy to further understand the competitiveness of self with respect to the competitors, or the strength and the weakness of the current patent strategy in the current market. This may be used as the future reference for improvement or as the basis for insurance evaluation in terms of risks or insurance rate by the insurance companies.

Therefore, the exemplary disclosed embodiments of the present invention may integrate a plurality of original database, such as patent databases and research paper databases, to form a complete data groups. After the system analysis to form a series of analyzable statistic string tables, the relationship database may be established.

The exemplary disclosed embodiments of the present invention may avoid the unnecessary large amount of data transmission with the clients; therefore, the present invention may accelerate the data analysis processing speed and enlarge analysis scope as well as reduce the interface difference among different original databases.

The exemplary disclosed embodiments of the present invention may be implemented with a computer program product with program code means for carrying out the technical document analysis system or the patent analysis system. The program codes may be executable in a computer system. The program codes may be stored in a storage device, such a memory device, and the computer system may access the program codes through the storage device.

Although the present invention has been described with reference to the exemplary embodiments, it will be understood that the invention is not limited to the details described thereof. Various substitutions and modifications have been suggested in the foregoing description, and others will occur to those of ordinary skill in the art. Therefore, all such substitutions and modifications are intended to be embraced within the scope of the invention as defined in the appended claims.

## Claims

1. A technical document analysis system, comprising:
a diagram analysis module, connected to a relationship database; and
a diagram analysis input/output module, for generating a management analysis report.

2. The system as claimed in claim 1, wherein said management analysis report consists of an X-dimension field, a Y-dimension field and a plurality of data combination analysis fields, where said X-dimension field and said Y-dimension field are selected from a group, including at least two of the following:
number of patents, assignee, assignee country, inventor, inventor country, application time, priority time, publication time, patent issue time, IPC number, US patent classification number, agency, examiners, product classification or technical classification; where said data combination analysis fields are to drive said diagram analysis module, according to the two- or three-dimensional combination analysis diagram generated based on the data of said database, so that said diagram analysis input/output module can output said combination analysis diagram.

3. The system as claimed in claim 2, wherein said X-dimension field and said Y-dimension field have the same combination and permutation order.

4. The system as claimed in claim 2, wherein the meaningless fields in said plurality of data combination analysis fields are left blank or marked as X or other symbols or drawings.

5. The system as claimed in claim 4, wherein said meaningless fields cannot drive said diagram analysis module to generate two- or three-dimensional combination analysis diagram.

6. The system as claimed in claim 1, said system is connected to a relationship database and a technical document analysis module, according to at least a searching condition input by a client end, to connect at least an original database and fetch a plurality of original data from said at least an original database, performs system analysis and comparison on said original data, and converts said original data into a plurality of sub-data and update or store said sub-data in said relationship database.

7. The system as claimed in claim 6, wherein said technical document analysis module further includes:
a data fetch module, said data fetch module connected to said original database for fetching a plurality of original data of technical documents; and
a system analysis and comparison module, for performing system analysis and
comparison on said original data with the data inside a relationship database in a single logic or multiple logic operation, and converting said original data into said plurality of sub-data.

8. A technical document analysis system, comprising:
an original database, for providing original data;
a client end, further including a diagram analysis input/output module, for transmitting instructions from said client's end to a server end and displaying analysis report from said server end on said client end;
a relationship database;
a diagram analysis module, for performing relationship computation and analysis with said relationship database according to said instructions of said client end; and
a technical document analysis module, for connecting to said original database to fetch original data from said original database, and updating or storing in said relationship database.

9. The system as claimed in claim 8, wherein said technical document analysis module arrange said original data into partial data with regularity and preliminary index to act as primary identifiers.

10. The system as claimed in claim 8, wherein said technical document analysis module further convert said original data into a plurality of sub-data according to the relationship between said partial data and primary identifiers, and after comparing said plurality of sub-data, updates or stores said technical document analysis module in said relationship database.

11. The system as claimed in claim 10, wherein said original data, after converted by said technical document analysis module into data groups with relationship correspondence, comprises one-to-one, one-to-many, many-to-many or text data, is then updated or stored in said relationship database.

12. The system as claimed in claim 8, wherein after performing relationship computation and analysis with said relationship database, said diagram analysis module generates a management analysis report, said management analysis report consists of an X-dimension field, a Y-dimension field and a plurality of data combination analysis fields, where said X-dimension field and said Y-dimension field are selected from a group, including at least two of the following: number of patents, assignee, assignee country, inventor, inventor country, application time, priority time, publication time, patent issue time, IPC number, US patent classification number, agency, examiners, product classification or technical classification.

13. A patent analysis system, comprising:
a database; and
a technical document analysis module, according to at least an input search condition,
for connecting said database and fetching a plurality of original data, performing system comparison and analysis on said original data, converting said original data into a plurality of sub-data, and updating or storing in said database.

14. The system as claimed in claim 13, said system further includes a management analysis report ,which consists of an X-dimension field, a Y-dimension field and a plurality of data combination analysis fields, where said X-dimension field and said Y-dimension field are selected from a group, said group includes at least two of the following:
number of patents, assignee, assignee country, inventor, inventor country, application time, priority time, publication time, patent issue time, IPC number, US patent classification number, agency, examiners, product classification or technical classification; where said data combination analysis fields are to drive said diagram analysis module, according to the two- or three-dimensional combination analysis diagram generated based on the data of said database, so that said diagram analysis input/output module
can output said combination analysis diagram.

15. Computer program product with program code means for carrying out said system according to claim 1, 2, 3, 4, 5, 6, 7, 8, 9, 10, 11, 12, 13 or 14.
